# EUROPEAN PATENT APPLICATION

(11) **EP 4 779 215 A1**
(43) Date of publication of application: **22.07.2026**
(21) Application number: 25221025.7
(22) Date of filing: 05.12.2025
(51) Int. Cl.: F24D 3/14, E04C 2/52, F24D 5/10

(54) **METHOD AND SYSTEM FOR MODULATING AN HEAT EXCHANGE BETWEEN A CLOSED ENVIRONMENT AND AN EXTERNAL ENVIRONMENT**

(30) Priority: 16.01.2025 IT 202500000636
(71) Applicant: Accademia Europea di Bolzano (EURAC), 39100 Bolzano (BZ) (IT); Active Insulation Systems B.V., 550415 Veldhoven (NL)
(72) Inventor: Peeters, Eugene Adrianus Franciscus Maria, 550415 Veldhoven (NL); Dona, Marinus Josephus Jacobus, 550415 Veldhoven (NL); Isaia, Francesco, 39100 Bolzano (IT); Juaristi Gutierrez, Miren, 39100 Bolzano (IT)
(74) Representative: Garavelli, Paolo

(57) **Abstract**

A method and a thermal bypass system (1) are described to modulate the heat exchanges between a closed environment between walls (2) and roof (3), in particular a living environment, and the external environment, in order to increase comfort and reduce energy consumption; the system comprises: the walls (2) and the roof (3); a heat transfer fluid; a first heat exchanger (4) located in the internal environment; a second heat exchanger (5) located in the external environment; a plurality of pipes (6) or holes which pass through the wall (2) or the roof (3) and connect the first and second heat exchangers (4, 5) so that a heat transfer fluid can circulate in both heat exchangers (4, 5); a movement device (11) designed to cause the circulation of the heat transfer fluid between the two heat exchangers (4, 5); an electronic device designed to activate the movement device (11), depending on the detected temperatures; and a shading device (8).

## Description

The present invention relates to a method, and to a system for implementing said method, for modulating the heat exchanges between a closed environment, in particular a living environment, with the external environment, in order to increase comfort and reduce energy consumption.

### State of the art

Current insulation systems minimize heat exchange between the interior and exterior environments, due to their high thermal resistance. This is an effective strategy when heat exchange between the two environments is detrimental to achieving adequate indoor comfort. However, this exchange is not always harmful. Capturing solar heat gains and distributing them throughout the building envelope can be an effective strategy for increasing the interior temperature, minimizing the energy requirements of the heating system. Similarly, if the interior temperature were to be too high, increasing heat exchange with a cooler exterior environment would reduce the energy consumption of any cooling systems.

In recent decades, the universally adopted strategy for energy-efficient buildings has been to increase thermal insulation, effectively making the above-mentioned strategies impossible. This approach has led to problems with internal overheating and poor use of solar heat gains.

Other strategies, such as ventilation with external air, do not solve the problem satisfactorily, because this method has the following disadvantages:
- to ensure effective heat exchange, a substantial volume of fluid (air) is exchanged, which creates turbulent air flows and therefore noise, especially if these flows are activated by mechanical ventilation systems;
- air can carry contaminants from the external environment to the internal environment;
- the risk of duct blockages, due to the exchange of mass between the outside and inside, leads to a greater need for maintenance, but also a shorter lifespan of the system since some parts of the ducts may be inaccessible and therefore difficult to control;
- a significant amount of space is used to position the ducts that conduct the air flow.

Documents WO-A1-2022/185270, EP-B1-3 430 317, US-A-4 069 809, DE-U1-20 2013 008494 and EP-B1-0 578 694 disclose systems according to the prior art.

### Object of the invention

Object of the present invention is overcoming the reported drawback by providing means capable of acting as a thermal bypass of the building envelope (i.e. walls and roofs), said thermal bypass being able to be activated to exploit solar heat gains or to allow heat dissipation, depending on the temperatures existing in the internal and external environments.

This and other objects are achieved by using a method and a system in accordance with the respective independent claims.

The method, used to optimize heat exchange between a closed environment, particularly a living space, and the outside environment, in order to increase comfort and reduce energy consumption, is characterized by the transfer of heat from the environment at a higher temperature to the one at a lower temperature through the use of a heat transfer fluid that circulates in heat exchangers present in the two environments. Means are provided to cause said circulation, whereby said circulation occurs under the control of an electronic device connected to temperature sensors capable of detecting the temperatures in the internal and external environments.

When the thermal bypass is deactivated, the device according to the invention is reduced to conventional insulation.

The system for optimizing heat exchange between a closed environment between walls and roof, particularly a living space, and the external environment, in order to increase comfort and reduce energy consumption, comprises:
- a first heat exchanger located in the internal environment, applied to the internal surface of the wall or roof;
- a second heat exchanger, located in the external environment, applied to the external surface of the wall or roof;
- a plurality of pipes or holes that pass through the wall or roof and connect said first and second heat exchangers so that a heat transfer fluid (e.g. water) can flow in both said heat exchangers;

- a movement device , connected aeraulically or hydraulically to said heat exchangers, capable of causing the circulation of said heat transfer fluid between said two heat exchangers;
- a plurality of temperature sensors placed in the internal and external environments, in particular on the surfaces of said heat exchangers;
- an electronic device, connected to said temperature sensors, capable of activating said handling and transport device, based on the temperatures detected.

Preferred embodiments and non-trivial variants of the present invention form the subject matter of the dependent claims.

It is understood that all attached claims form an integral part of this specification.

### Advantages

The invention solves the drawbacks in question as it allows overcoming the problems related to the mixing of internal air with external air.

Another advantage of the invention is its compatibility with existing situations, so it can be installed on the pre-existing building envelope.

The proposed construction method can be installed more easily due to its compatibility with mechanical connections.

### Preferred embodiments of the invention

The present invention will be better described by some preferred embodiments, provided by way of example and not by way of limitation, with reference to the attached drawings, in which:
- FIG. 1 shows the device according to the invention installed in a pre-existing wall;
- FIG. 2 shows the application of the device in the case where a lawn is created on the roof of the building;
- FIG. 3 shows the accessibility to the wiring and the handling device;
- FIG. 4 and 5 show when the inner panel and the outer panel are not on parallel planes;
- FIG. 6 shows the coupling with a large thermal mass.

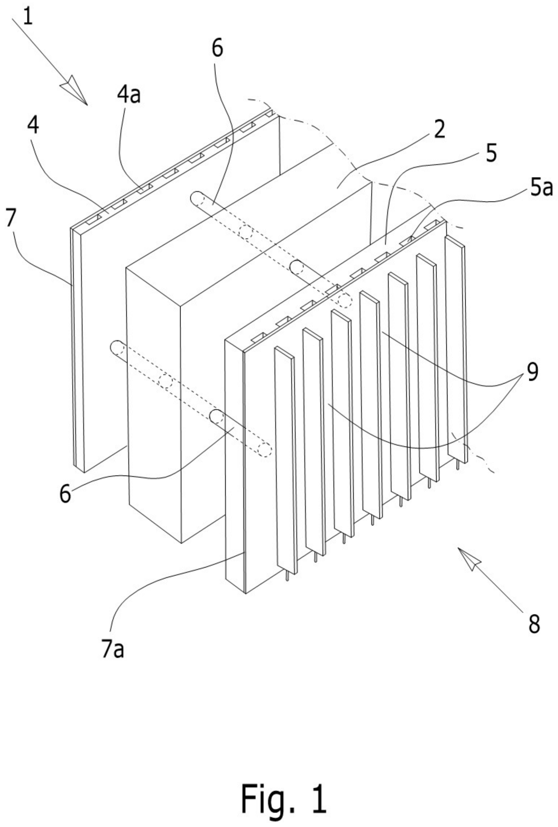

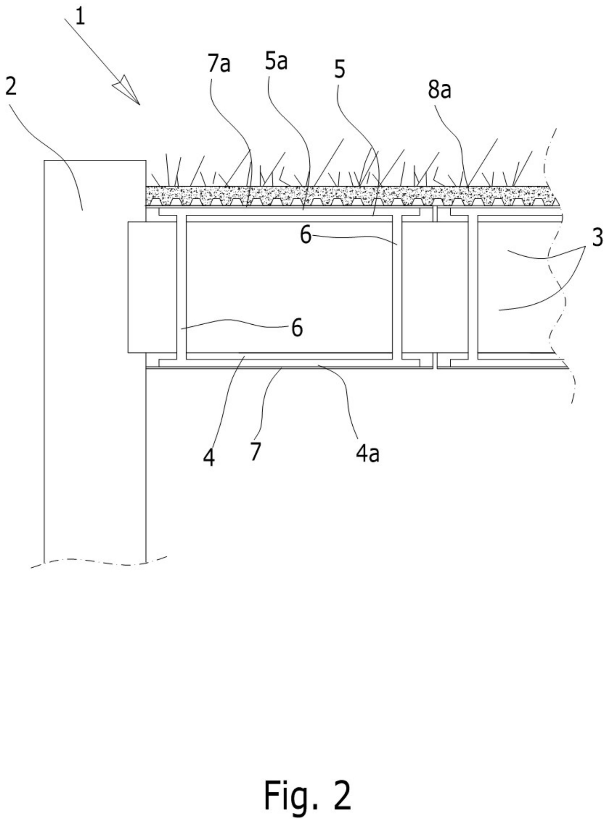

With reference to FIGS. 1 to 3, (1) indicates a thermal bypass system according to the invention, designed to be installed in a wall (2) or a roof (3) .

This thermal bypass system (1) comprises:
- a first heat exchanger (4) located in the internal environment, for example applied to the internal surface of the wall (2) or the roof (3);
- a second heat exchanger (5) located in the external environment, for example applied to the external surface of the wall (2) or the roof (3);
- a plurality of pipes (6) (alternatively, holes can be used) which pass through the wall (2) or the roof (3) and connect said heat exchangers (4, 5) to each other so that a heat transfer fluid (for example water or air) can flow in both said heat exchangers (4, 5);
- a movement device (11), connected hydraulically or aeraulically (depending on whether the heat transfer fluid is a liquid or a gas) with said heat exchangers (4, 5) capable of causing the circulation of said heat transfer fluid between said two heat exchangers (4, 5);
- a plurality of temperature sensors (not shown) placed in the internal and external environments, in particular on the surfaces of said heat exchangers (4, 5);
- an electronic device (not shown), connected to said temperature sensors, capable of activating said movement device (11), based on the temperatures detected.

According to a first preferred embodiment, said heat exchangers (4, 5) are made up of panels on the surface of which channels (4a, 5a) are obtained, for example by milling, and subsequent application of a closing plate (7) for the internal exchanger (4) and (7a) for the external exchanger (5).

For reasons that will be explained below, the closing plate (7a) of the external exchanger (5) preferably has high solar radiation absorption capacities.

These panels preferably have high insulating capacities, so as to increase thermal insulation when the bypass system is deactivated.

According to another preferred embodiment, a shading device (8) is provided comprising a plurality of panels (9), rotating around a longitudinal axis, which, when appropriately oriented, prevent solar radiation from directly hitting said second external heat exchanger (5). Said shading device (8) acts on the external exchanger (5).

In the case of the roof (3), to prevent solar radiation from hitting the second external heat exchanger (5), a lawn (8a) or a shading system similar to the one (8) described for the wall (2) can be advantageously created.

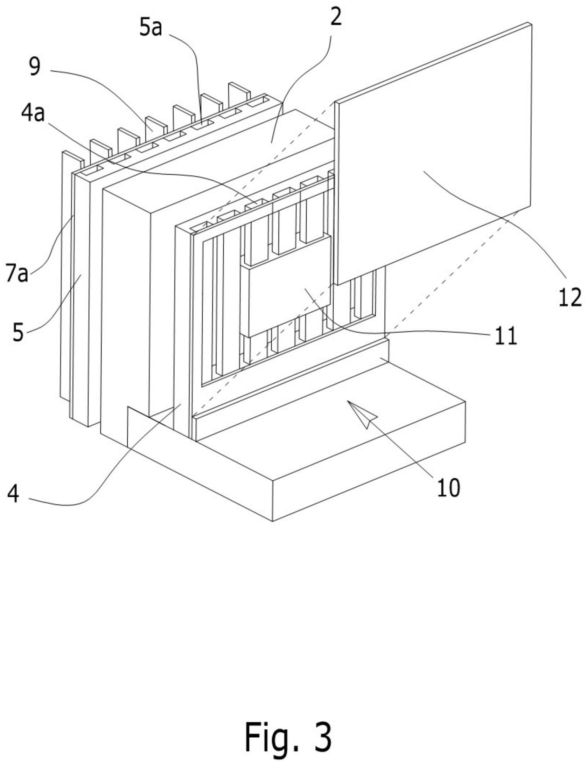

In FIG. 3 the wall (2) is shown from the inside, with a recess (10) highlighted in which the said movement device (11) is housed, connected to one or more of the said channels (4a), to activate the circulation of the heat transfer fluid in the exchangers (4, 5).

From inside said recess (10) there is access to an electrical wiring (not shown) for the operation of said movement device (11). Finally, a closing cover (12) is provided to protect the devices contained inside the recess (10).

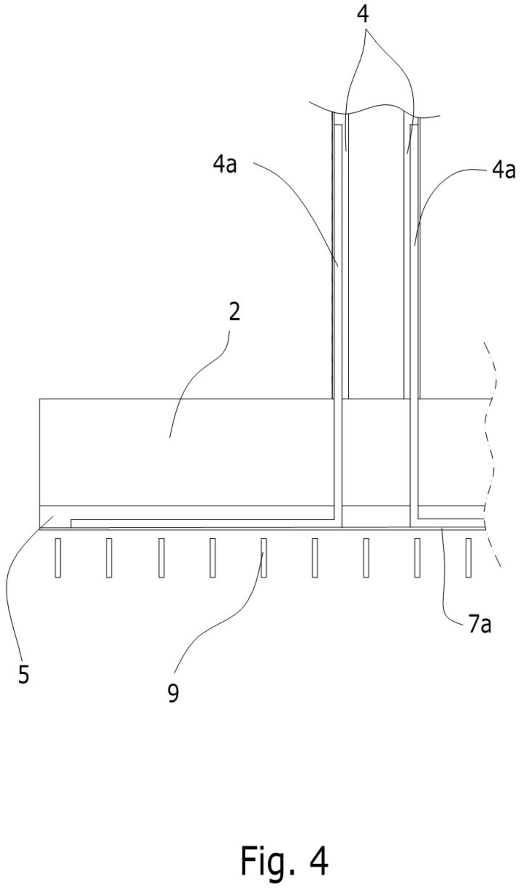

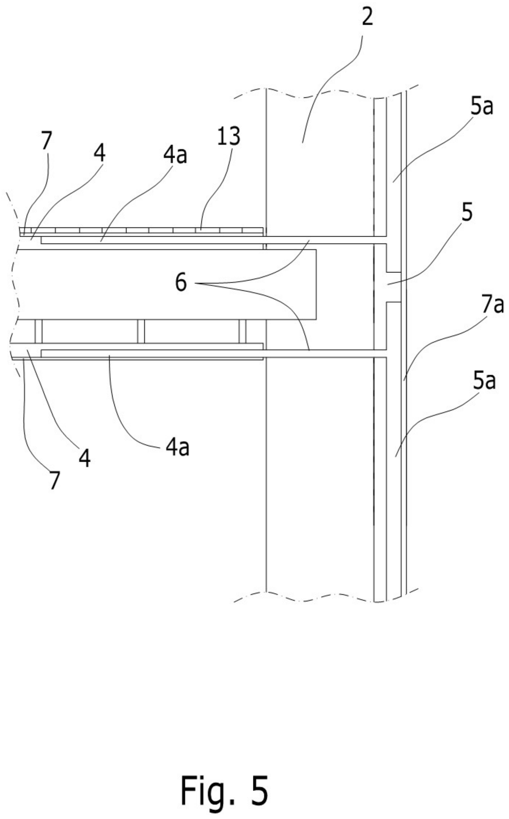

The internal heat exchanger (4) does not necessarily have to be on a plane parallel to the external heat exchanger (5), as shown in FIGS. 4 and 5. It is obviously sufficient that said internal heat exchanger (4) is positioned in the internal environment.

FIG. 5 shows the case of an internal heat exchanger (4) positioned on the floor, below the cladding (13), and as a false ceiling, both connected via the pipes (6) with the external heat exchanger (5), placed outside the wall (2).

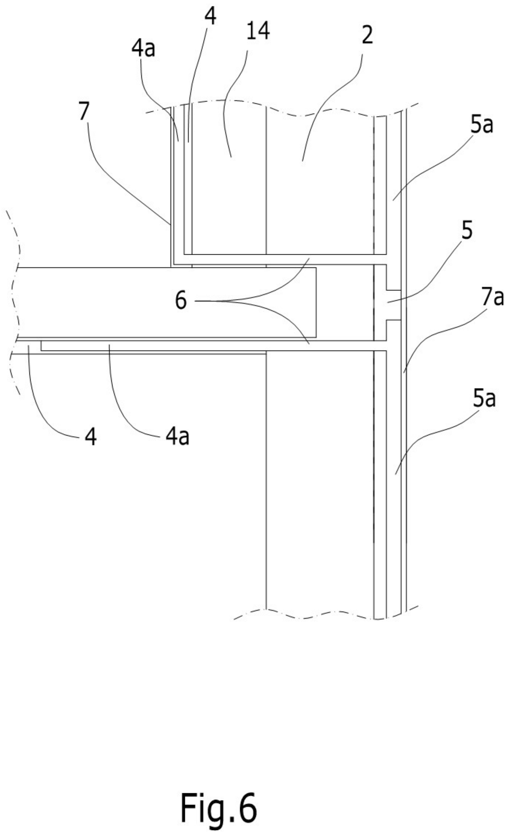

Finally, FIG. 6 shows the case in which a large thermal mass (14) is placed in a heat exchange relationship, with or without contact, with the internal exchanger (4), said thermal mass having the function of increasing the thermal inertia of the internal environment, so as to avoid sudden temperature variations in the living environment.

This thermal mass (14) is not necessarily in contact with the wall (2).

The operation of the thermal bypass system (1) according to the invention is as follows:
- if the internal temperature values are below a value deemed optimal for comfort and the temperature detected in the external exchanger (5) is higher than that detected in the internal exchanger (4), the electronic control device activates the movement device (11);
- if the internal temperature rises above the value deemed optimal for comfort and the temperature detected in the external exchanger (5) is lower than that detected in the internal exchanger (4), the electronic control device activates the movement device (11);
- in all other situations, the pumping device is stationary and the wall behaves as if it were equipped with conventional insulation.

The information on which this electronic control device is based is collected by temperature sensors positioned in the different layers of the bypass system and by internal and/or external air temperature sensors, in addition to the already mentioned temperature sensors applied to the internal and external heat exchangers (4, 5).

The electronic control device can also collect information from other sources, such as weather web applications.

To maximize the temperature that the surface can reach through radiation, the external surface enclosure (7a) must have a high capacity for absorbing solar radiation. However, this property can create unwanted high temperatures in the external heat exchanger (5), during periods of cooling demand. In these cases, the optional shading device (8) can be used to advantage, if present. In fact, by appropriately modifying the configuration of the panels (9), it is possible to prevent solar radiation from reaching the external surface (7a) of the external heat exchanger (5), thus limiting the increase in temperature.

The modification of the panel configuration (9) is also controlled by the electronic control device, which decides when the external surface (7a) must reach the highest or lowest possible temperature, or in other words, whether the incident solar radiation must reach the external surface (7a) or not.

The panels (9) can be used to modulate the heat losses by convection (depending on their opening degree, natural convective movements are minimized or maximized, thus heat loses are minimized or maximized as needed).

Finally, the mobile panels (9) can be advantageously covered by photovoltaic panels which, connected to the power supply wiring of the movement devices (11), of the actuators which cause the rotation of the mobile panels (9) and of the electronic control device, make the thermal bypass system (1) energetically autonomous. Conclusions

Preferred embodiments of the invention have been described, but they are naturally susceptible to further modifications and variations within the scope of the same inventive idea.

## Claims

1. Thermal bypass system (1) for modulating heat exchange between a closed environment between walls (2) and a roof (3), particularly a living space, and the external environment, in order to increase comfort and reduce energy consumption, comprising:
- said walls (2) and said roof (3);
- a heat transfer fluid;
- a first heat exchanger (4) located in an internal environment;
- a second heat exchanger (5) located in an external environment;
- a plurality of pipes (6) that pass through the wall (2) or the roof (3) and connect said first and second heat exchangers (4, 5) so that a heat transfer fluid can circulate in both said heat exchangers (4, 5);
- a movement device (11), connected hydraulically or aeraulically to said heat exchangers (4, 5), capable of causing the circulation of said heat transfer fluid between said two heat exchangers (4, 5);
- a plurality of temperature sensors placed in the internal and external environments;
- an electronic device, connected to said temperature sensors, capable of activating said movement device (11), based on the detected temperatures; and
- a shading device (8) comprising a plurality of panels (9) which, when suitably configured, prevent solar radiation from hitting said second external heat exchanger (5);
wherein said first heat exchanger (4) located in the internal environment is applied to the internal surface of a wall (2) or of the roof (3) and said second heat exchanger (5) located in the external environment is applied to the external surface of said wall (2) or of the roof (3).

2. Thermal bypass system (1) for modulating heat exchanges according to claim 1, **characterized in that** said pipes (6) are replaced by holes.

3. Thermal bypass system (1) for modulating heat exchanges according to claim 1 or 2, **characterized in that** said heat transfer fluid is water or air.

4. Thermal bypass system (1) for modulating heat exchanges according to claim 1, **characterized in that** said plurality of temperature sensors, located in the internal and external environments, are applied to said heat exchangers (4, 5).

5. Thermal bypass system (1) for modulating heat exchanges according to claim 1, **characterized in that** said heat exchangers (4, 5) are made up of panels on the surface of which channels are made (4a, 5a) and a closing plate is subsequently applied (7, 7a).

6. Thermal bypass system (1) for modulating heat exchange according to claim 5, **characterized in that** the panels constituting said heat exchangers (4, 5) are made of insulating material so that said heat exchangers (4, 5) increase the thermal insulation of the building.

7. Thermal bypass system (1) for modulating heat exchange according to any of the preceding claims, **characterized in that** it has a lawn (8a), created on the roof (3), capable of preventing solar radiation from hitting said second external heat exchanger (5).

8. Thermal bypass system (1) for modulating heat exchange according to any of the preceding claims, **characterized in that** said internal heat exchanger (4) is positioned on the floor, underneath the cladding (13), and/or as a false ceiling.

9. Thermal bypass system (1) for modulating heat exchanges according to any of the preceding claims, **characterized by** the fact that it provides a large thermal mass (14) placed in heat exchange relationship, with or without contact, with the internal exchanger (4), said thermal mass (14) having the function of increasing the thermal inertia of the internal environment, so as to avoid sudden temperature variations in the living environment.

10. Thermal bypass system (1) for modulating heat exchanges according to any of the preceding claims, **characterized in that** the mobile panels (9) are covered by photovoltaic panels which, connected to a power supply wiring for the movement devices (11), the actuators which cause the movement of the mobile panels (9) and the electronic control device, make the thermal bypass system (1) energetically autonomous.

11. Method for modulating heat exchanges between a closed environment, in particular a living environment, with the external environment, in order to increase comfort and reduce energy consumption, wherein said environments are separated by a wall (2) and/or a roof (3), said method being implemented via the thermal bypass system (1) according to any of the preceding claims, said method transferring heat from the environment at a higher temperature to the one at a lower temperature by using a heat transfer fluid which circulates in the heat exchangers (4, 5) present in the two environments, means (11) being provided for moving said heat transfer fluid, wherein said movement occurs under the control of an electronic device connected to temperature sensors for detecting the temperatures in the internal and external environments.

12. Method for modulating heat exchange according to claim 11, **characterized by** the following functions:
- if the internal temperature drops below a value deemed optimal for comfort and the temperature detected in the external exchanger (5) is higher than that detected in the internal exchanger (4), the movement device (11) is activated;
- if the internal temperature rises above said value deemed optimal for comfort and the temperature detected in the external exchanger (5) is lower than that detected in the internal exchanger (4), the movement device (11) is activated.
